# EUROPEAN PATENT APPLICATION

(11) **EP 2 515 268 A1**
(43) Date of publication of application: **24.10.2012**
(21) Application number: 12164977.6
(22) Date of filing: 20.04.2012
(51) Int. Cl.: G06Q 30/00

(54) **System and method for the management of goods and / or services**

(30) Priority: 21.04.2011 IT TO20110353
(71) Applicant: Franchina, Pietro, 10040 La Loggia (Torino) (IT)
(72) Inventor: Franchina, Pietro, 10040 La Loggia (Torino) (IT)
(74) Representative: Robba, Pierpaolo

(57) **Abstract**

The present invention refers to a system for the management of requested or offered goods, comprising one or more electronic devices (11) associated with respective users and connected to a wide area network (12) for data exchange, and one or more servers (14) configured for accessing a data base (15a). The data base comprises at least three filters of which: a first filter comprises a plurality of records, wherein each record comprises at least a father record identifier and a father label univocally associated with each other; a second filter comprises a plurality of records, wherein each record comprises at least one options record identifier and an options label univocally associated with each other, and an identifier of a father record present in the first filter; a third filter comprises a plurality of records, wherein each record comprises, associated with a certain options label, the corresponding identifier of the options record and the corresponding identifier of the father record, and an identifier of hierarchy record representative, if present, of an identifier of a further record present in the first filter. The system (10) further comprises program modules arranged to: propose to the user, on a graphical interface (11a), one or more selection menus such that, following a label selection carried out by the user, the user can display one or more labels present in the first or second filter (21, 22); and/or a set of requested or offered goods. The invention also concerns a method for the management of requested or offered goods.

## Description

### Technical field

The present invention generally relates to a system and a method for the management of goods and/or services that can be requested or offered, for instance requested for purchase or offered for sale, by different users.

More particularly, the present invention relates to a method of requesting goods from or offering goods to users capable of accessing a wide area network, for instance the Internet, to which reference is made hereinbelow for the sake of convenience of description.

For the sake of convenience of description, the expression "purchase and sale of goods" will preferably also be used to exemplify the request and the offer of goods and/or services.

### Prior Art

Systems and methods for the purchase or sale of goods by user accessing the Internet are well known.

One of the most popular among the prior art systems and methods, known under the trademark "eBay", allows the users connected to the Internet to purchase and/or sell goods. The prior art system and method, which is disclosed also in US Patent no. 5,845,265, is intended to create a market for goods through the use of terminals connected to a wide area network.

According to the prior art in systems for the purchase and sale of goods by using the Internet, the software platform generally comprises a management or access software or package and a data base (DB) organised according to a rigid structure in which the levels or pull down menus to which each user can have access are limited and previously defined.

In particular, according to the document mentioned above, free descriptions or publications (detailed descriptions, pictures and so on) are provided in connection with two levels or pull down menus (main category and secondary category).

Such a methodology, also defined as an iterative methodology, entails that, when the increase in the number of levels or categories becomes necessary, for instance the increase from two to three levels, the structures of the DB and the access package are modified, since only such a modification would allow accessing the new category.

In other words, an iterative package for the purchase and sale of goods, when the number or the type of levels or categories are to be changed, compels to change at the same time both the access software and the data base structure, by suitably modifying the structural features of the data base by means of a programming language, such as for instance the DDL language (Data Definition Language).

Such a technical problem may entail, in the practice, unpleasant effects.

For instance, by using the prior art systems, it may happen that, following the sale offer of a good belonging to a given category of goods, it is not always certain that the search for the purchase of that good actually converges to the good offered for sale, either because the categories do not match or because they are not at the same level in the DB.

Actually, depending on the structure of the DB and the access package, the offered good, for instance, could be placed in a category different from the category in which the good requested for purchase is placed.

### Description of the invention

It is an object of the present invention to solve the problems mentioned above of the prior art.

The object is achieved by the system for the management of goods as claimed herein.

The present invention also relates to a method for the management of goods, as well as to an information technology product that can be loaded into the memory of at least one computer and comprises software code portions for carrying out the above method, when the product is run on at least one computer.

As used herein, the reference to such an information technology product is meant as being equivalent to the reference to a computer-readable medium containing instructions for controlling a computer system in order to coordinate the execution of the method according to the invention.

The reference to "at least one computer" is directed to highlight the possibility that the present invention is performed in distributed and/or modular manner.

The claims are integral part of the technical teaching provided herein in respect of the invention.

In accordance with a feature of a preferred embodiment, the method comprises managing a limited number of filters, in particular at least three filters, in order to propose to a user, wishing to request or offer goods and/or services, the access in recursive manner to one or more selection menus, which are accessible in specular manner by means of identical labels in case of both a request phase and an offer phase.

In accordance with another feature of the present invention, the menus that can be accessed for requesting or offering goods and/or services are in the same number and of identical type and they can be incremented at will, in specular tree structures, whereby the number of menus or levels than can be defined for the request and offer of goods is made substantially unlimited.

In accordance with a further feature of the present invention, the method automatically activates the transmission of electronic mail messages in order to inform, for instance, a possible buyer that a good is available for sale and/or to inform a user wishing to sell a good of the presence of a possible buyer.

### Brief Description of the Figures

The above and other features of the present invention will become apparent from the following description of a preferred embodiment, made by way of non limiting example with reference to the accompanying drawings, in which elements denoted by a same or similar numerical reference correspond to components having the same or similar function and construction, and in which:
- Fig. 1 shows a general block diagram of the system according to the invention;
- Fig. 2 is a diagram showing filters present in the data base shown in Fig. 1;
- Fig. 3 is a schematic diagram of the modalities of access to the data base (DB) of goods for sale or purchase;
- Fig. 4 is a general flow chart of the operation of the system shown in Fig. 1; and
- Fig. 5 schematically shows a graphical user interface of the system shown in Fig. 1.

### Description of a preferred embodiment

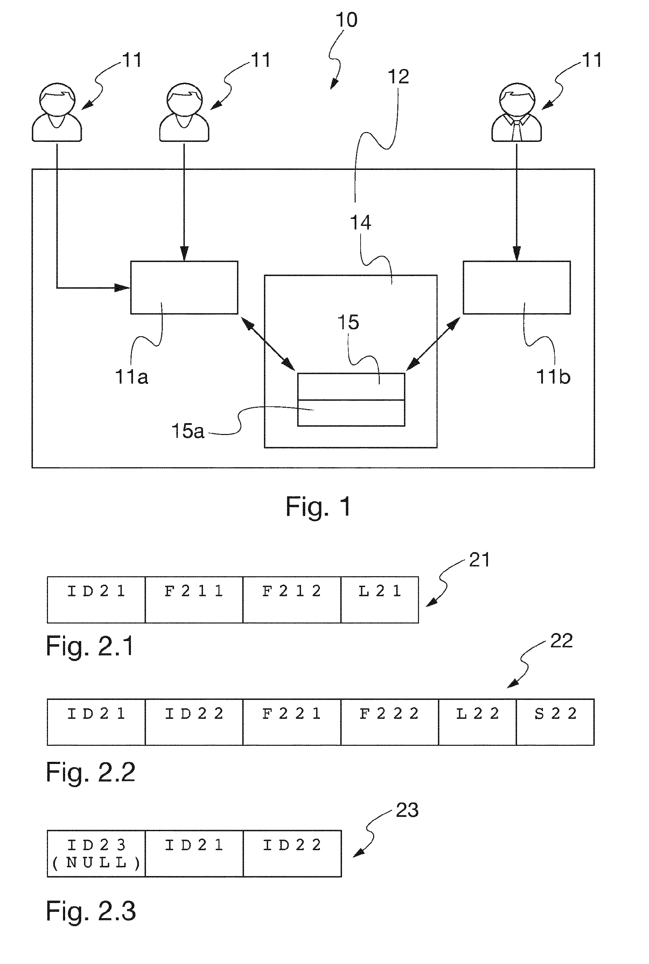

Referring to Fig. 1, a system 10 for the management of goods that can be purchased and/or sold is based on the use of an infrastructure comprising, for instance, a plurality of users capable of accessing, by means of electronic devices 11 equipped with a display, e.g. personal computers (PCs), cellular phones and so on, and a wide area network 12, e.g. an Internet-like network, to areas or servers arranged to enable the purchase and the sale of goods by means of a specific package 15 and a data base (DB) 15a connected thereto.

In the preferred embodiment, network 12 can be accessed by:
- visiting or registered users arranged, for instance, to operate with package 15 in order to request or offer goods and/or services, for instance in order to purchase and/or sell goods, to which reference is made hereinafter, by using a first graphical interface 11a on electronic devices 11;
- system administrator users arranged to update software modules in package 15 or to add information items or records to DB 15a by means of a second graphical interface 11b. In particular, the addition of information items or records to DB 15a entails that graphical interface 11b includes predefined commands or options and that, as a result of the commands, corresponding commands, e.g. in DML language (Data Manipulation Language), known per se, are actuated in order to add information items or records to or to modify the information items or records in DB 15a.

In accordance with the present invention, the structure of package 15 and DB 15a is of recursive type.

In particular, in accordance with the present invention, the package and the DB are structured in recursive manner in the sense that the access to the descriptions of the goods for sale or for purchase starts from highly populated sets and progressively converges, along a tree structure, towards less populated or possibly empty sets, depending on the level of detail or on the requested category.

However, by using the recursive methodology in accordance with the present exemplary embodiment, convergence is always ensured and the structure of DB 15a is always independent of the number of the levels or categories of detail envisaged.

In accordance with the present exemplary embodiment, DB 15a is preferably organised into three tables or filters 21, 22 and 23, respectively (Figs. 2.1, 2.2 and 2.3) each having a specific function.

Each table 21, 22 or 23 contains a number of records that can be substantially unlimited and such as to entail a number of levels or categories of sale or purchase that is also unlimited.

Of course, the adjective "unlimited" is to be intended here as: depending on the memory capacity of server 14 hosting DB 15a.

In accordance with the present exemplary embodiment, the first filter 21, also referred to herein as "father" filter, comprises for instance the following fields:
- a field for a numerical identifier ID21, for instance with four digits, representative of a given category of goods; such an identifier is unique within the father filter;
- a field for an optional first flag F211, representative of whether identifier ID21 is active or, in the alternative, is not used;
- a field for an optional second flag F212, representative of whether the record corresponding to identifier ID21 is to be considered as removed from the father filter;
- a field for a label L21 representative of the category or kind of the good to be sold or purchased; such a label is unique for a given identifier, in case of both a good to be sold or a good to be purchased, so that the tree structure of the goods to be sold corresponds to the tree structure of the goods to be purchased.

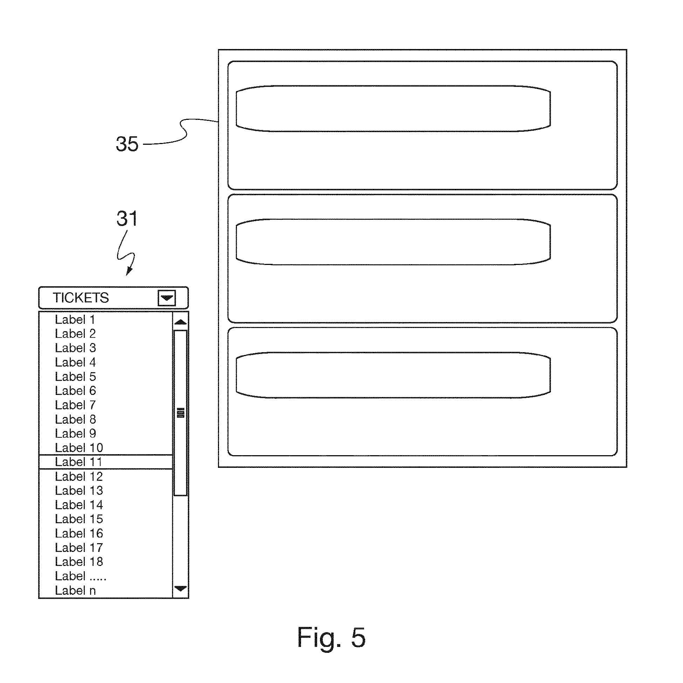

The father filter is used by the package as an input table to which generally a set of goods (Fig. 5) included in the filter label corresponds.

The second filter 22 (Figs. 2.1, 2.2, 2.3), also referred to herein as "options filter", comprises for instance the following fields:
- a field for a first numerical identifier corresponding to identifier ID21 and to the label present in the filter of origin; such a first numerical identifier ID21 can be repeated several times within the options filter;
- a field for a second numerical identifier ID22, for instance with four digits, representative of a possible option concerning the label of origin; such a second identifier is unique within the second filter;
- a field for an optional first flag F221, representative of whether identifier ID22 is active or, in the alternative, is not used;
- a field for an optional second flag F222, representative of whether the record corresponding to identifier ID22 is to be considered as removed from the father filter;
- a field for a label L22 associated in one-to-one correspondence with the second numerical identifier ID22 and representative of a possible option concerning the label present in the father filter;
- an optional sequential number S22, representative of a display position, for instance the position in a frame on the display.

The options filter is used by the package as a selection or choice table for selecting, within a set defined by the father filter, a subset of goods having in common a feature included in the features provided in the father set.

The third filter, also referred to herein as "hierarchy" filter, comprises for instance the following fields:
- a field for a first numerical identifier ID23, for instance with four digits, representative of a record identifier ID21 possibly present in the first filter; the presence of a "NULL" value in such a field indicates that the number of levels or categories envisaged for a given good or label present in father filter 21 or in options filter 22 has been exhausted or completed;
- a field for a second identifier representative of identifier ID21 of origin from father filter 21;
- a field for a third identifier representative of identifier ID22 of origin from options filter 22.

Hierarchy filter 23 is used by the package as a table arranged to allow the process to be recursive.

Actually, such a filter allows associating a given level or category of origin with a further level or category present in father filter 21.

For the sake of a better clarity, a concrete example of use of the three tables or filters 21, 22 and 23 by package 15 is disclosed hereinafter.

Assuming for instance that a user wishes to sell or buy a good, e.g. a house, the contents of the three filters could be:

| First filter or table 21 | | | | | | | | |
|---|---|---|---|---|---|---|---|---|
| ID21 | F211 | | F212 | | L21 | | | |
| 0001 | 1 | | 1 | | HOUSE | | | |
| 0002 | 1 | | 1 | | MOTOR CAR | | | |
| 0003 | 1 | | 1 | | MOTOR CYCLE | | | |
| ..... | . | | . | | ........ | | | |
| 0067 | 1 | | 1 | | NUMBER OF ROOMS | | | |

| Second filter or table 22 | | | | | | | | |
|---|---|---|---|---|---|---|---|---|
| ID21 | ID22 | F221 | | F222 | | L22 | | S22 |
| 0001 | 0001 | 1 | | 1 | | RED | | 1 |
| 0001 | 0002 | 1 | | 0 | | BLUE | | 2 |
| 0001 | 0003 | 1 | | 1 | | GREEN | | 3 |
| .... | .... | . | | . | | .... | | . |
| 0067 | 0004 | 1 | | 1 | | THREE | | 1 |
| 0067 | 0005 | 1 | | 1 | | FOUR | | 2 |

| Third filter or table 23 | | | | | | | | |
|---|---|---|---|---|---|---|---|---|
| ID23 | ID21 (FATHER) | | | | | | ID22 | |
| 0067 | 0001 | | | | | | 0003 | |
| NULL | 0067 | | | | | | 0004 | |

A user who would access the package by using a PC 11 and an Internet access and who, for instance, would search for a house, would find on the first graphical interface 11a, in accordance with the present exemplary embodiment, a menu 31 (Fig. 1, Figs. 2.1, 2.2, 2.3 and Fig. 5), e.g. a pull down menu, with a list of predefined options or labels, including also the label "house".

The selection of the label "house" by the user is such as to make available, for instance, the whole set of the houses offered for sale, which, in accordance with the present exemplary embodiment, can be looked at in the whole by the user.

However, should the user wish to restrict the set or to select a further option, anyhow provided, for instance, in a pull down menu suitably predisposed, such a user would find, in accordance with the example and thanks to the second table 22, two possible options:
- red house;
- green house.

In accordance with the example, the option "blue house" is cancelled since its flag F222 has a value 0, and thus it is not visible.

The selection of either option would lead the package to make a subset of the set of the houses for sale available to the user as well as to access the third table 23, in order to check for the presence of further option levels or menus previously set up.

In the exemplified case, the selection of option 0003 "green" by the user would lead to a further menu provided in table 21 and including, in accordance with the example, the option "number of rooms".

Selecting the option "number of rooms", present in record 0067 in the example, would lead to a menu arranged to allow selecting green houses with three or four rooms.

The selection of green houses with three rooms would be managed, in accordance with the example, as a selection without further possible levels (value "NULL" for ID23 in the third table 23).

The practical example clearly shows that, thanks to the recursive process provided in accordance with the present invention, once the levels or labels characteristic of a plurality of goods and the possible options associated therewith have been defined, nothing in the system according to the invention hinders the increase of the number of levels, by replacing value "NULL" of identifier ID23 in table 23 with a new ID23 corresponding to a new record in the first table 21 and by possibly introducing one or more records in table 22.

The example described above also clearly shows that a user wishing to sell a good can always follow, in specular manner, the same path as a user wishing to buy the good, by sequentially using the same levels or labels predefined and vice versa.

In other words, a user wishing to purchase or sell a good moves along a same tree structure that is specular for both the goods to be purchased and the goods to be sold.

Whatever the level at which the selling or purchasing user decides to stop in order to make the sale or purchase request public, an identical, specular level will correspond to such a level for both the sale and the purchase.

Otherwise stated, in accordance with the present exemplary embodiment, since the labels or levels or menus are predefined, even though they may be increased at will without modifying the structure of DB 15a, a correspondence between the seller and the buyer can always and anyway be established, provided the good to be exchanged exists, since the labels are identical and predefined along tree structures which are specular as far as the goods to be sold and the goods to be purchased are concerned.

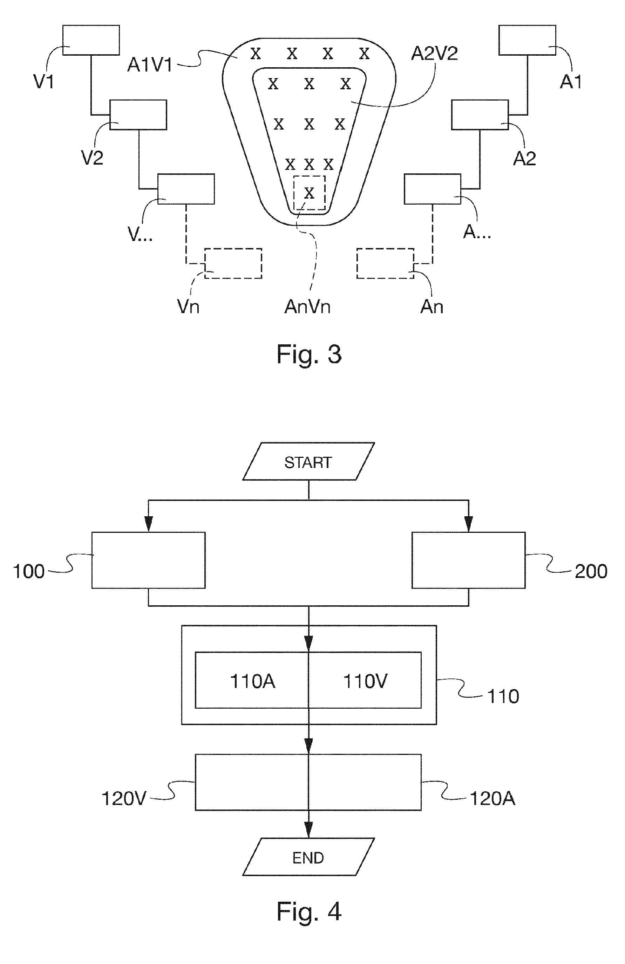

The most general system architecture comprises a step structure with substantially infinite and converging steps, that can be denoted as sale menus V1, V2, V..., Vn (Fig. 3) and corresponding purchase menus A1, A2, A..., An, having the same access label.

The access to the first sale or purchase menu V1 or A1 allows the visibility of the whole set of goods to be purchased or sold A1V1, respectively.

The access to the second sale or purchase menu V2 or A2 allows the visibility of the subset of goods to be purchased or sold A2V2, respectively, which subset, of course, may comprise the whole or, preferably, only part of the goods in set A1V1.

The access to the n-th sale or purchase menu Vn or An allows the visibility of the n-th subset of goods to be purchased or sold AnVn, respectively.

As it can be readily understood, the selling user will see the goods that are requested for purchase and the buying user will see the goods offered for sale identified by a same label.

The graphical representation in Fig. 3 does not take such a distinction into account, since it is aimed at highlighting the specular arrangement of the system structure.

The operation of the system for the management of goods to be purchased or sold described above is as follows.

For the sake of simplicity, it is assumed that in preliminary steps, of known type, the user has accessed the Internet site hosting package 15 and DB 15a by possibly registering him/herself or by accessing through an identifier already stored in the system.

Once the preliminary steps have been completed, in a first step the user indicates a selection of a path, which can be a purchase path 100 or a sale path 200.

Following the initial selection, the levels envisaged for both possibilities are identical and they can be selected, for instance, by means of pull-down menus, in one or more steps 110 that allow making at least a purchase request 110A (request) or a sale offer 110B (offer) public, by means of images, references to a kind of user, e.g. a user requesting or offering a good and/or a service, and/or the corresponding contact modalities.

Once the request or the offer has been made public, a further user selecting the same levels by means of the menus provided in package 15 and stored in DB 15a will arrive at one or more goods requested or offered, which correspond to the same path through successive menus along specular tree structures.

In a further step 120, package 15 automatically transmits by means of a message, e.g. an electronic mail (e-mail) message, a notice informing the user offering a good for sale of the presence of a possible purchaser, and/or the user wishing to purchase a good of the presence of a possible seller.

In synthesis, the application of a recursive methodology advantageously allows:
- finding the goods offered for sale or requested for purchase by following menus with predetermined labels, so that, if the label exists and the good exists, the convergence to the good is not hypothetical but it is ensured;
- keeping the package and DB structures unchanged as the user requirements, intended as requirements concerning levels of detail necessary to find a good, change;
- allowing, thanks to the specular arrangement of the tree structures of the system, actuating automatic procedures for informing the users wishing to sell or purchase goods.

Throughout the description, reference has been preferably made to the purchase or sale of goods but, as it can be readily understood, the method and system described are intended as being generally applicable to the requests of goods and/or services in different manners, such as for instance sale, rent, lease, barter and so on.

Of course, obvious changes and/or modifications to the above description are possible in respect of the components and connections, as well as in respect of the details of the illustrated construction and the operating manner, without departing from the invention as set forth in the following claims.

## Claims

1. Method for the management of goods and/or services to be requested by or offered to users through electronic devices (11) connected to a wide area telecommunication network (12), said method comprising the steps of:
- providing, on one or more servers (14), a data base (15a) comprising a predefined number of filters (21, 22, 23), said predefined number of filters being greater than or equal to three;
- providing in said data base (15a) at least one first filter or father filter (21) comprising a plurality of records, each record comprising at least a father record identifier (ID21) and a father label (L21) univocally associated with each other;
- providing in said data base (15a) at least one second filter or options filter (22) comprising a plurality of records, each record comprising at least an options record identifier (ID22) and an options label (L22) univocally associated with each other, and an identifier (ID21) of a father record present in the first filter (21);
- providing in said data base (15a) at least one third filter or hierarchy filter (23) comprising a plurality of records, each record comprising, associated with a certain options label (L22), the corresponding identifier of the options record (ID22) and the corresponding identifier (ID21) of the father record, and an identifier of hierarchy record representative, if present, of an identifier (ID21) of a further record present in the first filter;
- providing on said one or more servers (14) program modules arranged to:
- propose to the user one or more selection menus arranged to display, following a selection of a label (L21, L22) carried out by the user on a graphical interface (11a):
- one or more labels (L22) included in said first or second filter (21, 22); and/or
- a set of goods to be requested or offered, corresponding to the selected label (L21, L22), said labels being mutually identical and identically managed by the program modules both for requesting and for offering goods.

2. Method according to claim 1, in which said steps of providing at least one first filter and at least one second filter comprise, respectively, the steps of including into the records of said filters (21, 22), flags (F211, F212, F221, F222) settable so as to allow selective inhibition of the visualisation of said records on said electronic devices.

3. Method according to claim 1 or 2, in which said step of providing said selection menus comprises the step of:
- providing an architecture of specular selection menus wherein the number and the type of label (L21, L22) present in the goods request menus is identical to those present in the goods offer menus.

4. Method according to any one of claims 1 to 3, in which further program modules are provided configured for modifying in a recursive way the number of records present in each of said filters (21, 22, 23) so as to allow modifying the number and type of selection menus or levels that said users can access by means of said electronic devices (11).

5. Method according to any one of claims 1 to 4, in which said step of providing program modules in order to propose one or more selection menus to the user comprises the step of:
- proposing pull-down menus including said labels (L21, L22).

6. Method according to any one of claims 1 to 5, further comprising the step of:
- providing on said one or more servers (14) further program modules configured for enabling the server to automatically provide for the transmission of a corresponding E-Mail message from a user arranged to offer to a user arranged to request and/or vice-versa as a function of the set of requested or offered goods corresponding to the selected label (L21, L22).

7. System for the management of goods to be requested or offered, comprising:
- one or more electronic devices (11) associated with respective users and connected to a wide area telecommunication network (12);
- one or more servers (14) configured for accessing a data base (15a) comprising at least three filters (21, 22, 23), in which:
- at least one first filter or father filter (21) comprises a plurality of records and in which each record comprises at least a father record identifier (ID21) and a father label (L21) univocally associated with each other;
- at least one second filter or options filter (22) comprises a plurality of records and in which each record comprises at least one options record identifier (ID22) and an options label (L22) univocally associated with each other, and an identifier (ID21) of a father record present in the first filter (21);
- at least one third filter or hierarchy filter (23) comprises a plurality of records and in which each record comprises, associated with a certain options label (L22), the corresponding identifier (ID22) of the options record and the corresponding identifier (ID21) of the father record, and an identifier of hierarchy record representative, if present, of an identifier (ID21) of a further record present in the first filter; and
- program modules arranged to:
- propose to the user on a graphical interface (11a) of said electronic devices (11) one or more selection menus, following a selection of a label (L21, L22) carried out by the user, said menus comprising:
- one or more labels (L22) present in said first or second filter (21, 22); and/or
- a set of goods to be requested or offered corresponding to the selected label (L21, L22), said labels being mutually identical and identically managed by the program modules both for requesting and for offering goods.

8. System according to claim 7, in which program modules are provided for allowing increasing at will the selection labels or selection levels (L21, L22) present in said at least one first and said at least one second filter (21, 22).

9. System according to any one of claims 7 to 8, comprising further program modules configured for enabling said one or more servers to automatically provide for the transmission of E-mail messages from a user arranged to offer to a user arranged to request and/or vice-versa as a function of the set of requested or offered goods corresponding to the selected label (L21, L22) and published by said users.

10. Computer program product directly loadable in an internal memory of a computer and including software code portions arranged to perform, when the product is run on at least one computer, the method according to any one of claims 1 to 6.
